# FASCICULE DE BREVET EUROPEEN

(11) **EP 2 217 682 B1**
(45) Date de publication et mention de la délivrance du brevet: **31.08.2011**
(21) Numéro de dépôt: 08870898.7
(22) Date de dépôt: 17.10.2008
(51) Int. Cl.: C10B 49/10, C10J 3/50, B01J 8/24, F26B 3/08

(54) **PROCEDE ET DISPOSITIF DE TORREFACTION ET DE BROYAGE EN LIT FLUIDISE D'UNE CHARGE DE BIOMASSE EN VUE D'UNE GAZEIFICATION OU D'UNE COMBUSTION ULTERIEURE**
VERFAHREN UND VORRICHTUNG ZUR RÖSTUNG UND SCHLEIFUNG EINER BIOMASSELADUNG IN EINEM FLIESSBETT ZUR FOLGENDEN GASIFIZIERUNG ODER VERBRENNUNG
METHOD AND DEVICE FOR FLUIDISED-BED ROASTING AND GRINDING OF A BIOMASS LOAD FOR SUBSEQUENT GASIFICATION OR COMBUSTION

(30) Priorité: 30.11.2007 FR 0708377
(43) Date de publication de la demande: 18.08.2010
(73) Titulaire: IFP Energies nouvelles, 92852 Rueil-Malmaison Cedex (FR)
(72) Inventeur: ROLLAND, Matthieu, F-69390 Vernaison (FR); LOURET, Sylvain, F-69003 Lyon (FR)
(86) Numéro de dépôt international: PCT/FR2008/001456
(87) Numéro de publication internationale: WO 2009/090335

(56) Documents cités:
- EP-A- 0 039 270
- WO-A-92/12796
- DD-A1- 224 649
- DE-A1- 19 618 880
- FR-A- 1 422 951
- US-A1- 2003 221 363

## Description

### DOMAINE DE L'INVENTION

La présente invention concerne un procédé de préparation d'une charge contenant de la matière fibreuse lignocellulosique, seule ou en mélange avec une coupe hydrocarbonée en vue d'alimenter une unité de gazéification ou un système de combustion. L'invention permet également la préparation de copeaux de bois en vue de leur utilisation dans le domaine des procédés de vinification

Une application importante du dispositif selon l'invention est la préparation d'une charge de type biomasse lignocellulosique en vue de la production de carburants dit "biocarburant".

La chaîne de production de ces biocarburants comporte une étape de gazéification alimenté par la charge de biomasse mise sous forme de petites particules de taille généralement inférieure à 1mm, et présentant une teneur en eau généralement inférieure à 10 % poids.

L'étape de gazéification conduite à un gaz contenant essentiellement du monoxyde de carbone et de l'hydrogène, connu de l'homme du métier sous le nom de gaz de synthèse appelé aussi "Syngaz". Le gaz de synthèse permet ensuite de recomposer un ensemble de coupes hydrocarbures, notamment une coupe essence et une coupe gazole au moyen de la synthèse Fischer Tropsch. Le gaz de synthèse peut également être utilisé comme vecteur en vue de la production d'énergie, ou comme matière première pour la production de bases pour la chimie et la pétrochimie.

La présente invention n'est pas liée à une utilisation spécifique de la biomasse préparée aux conditions de granulométrie et de teneur en eau voulues.

L'unité selon la présente invention peut, par exemple, être utilisée pour produire des particules de biomasse sèches et calibrées à une dimension inférieure au mm qui peuvent être utilisées dans un procédé de combustion (chaudière ou four) ou de vinification.

On peut citer comme exemples de particules de biomasse utilisables dans le cadre de la présente invention les déchets de diverses espèces de bois, notamment les résineux, les déchets de type paille ou bagasse de canne à sucre, ou tout autre type de résidus ligneux.

Dans la suite du texte, nous utiliserons comme exemple typique de charge lignocellulosique des copeaux de bois résultant d'un déchiquetage préalable. L'étape de déchiquetage ne fait pas partie de la présente invention, mais peut en cas de besoin lui être ajoutée en amont.

Ces copeaux de bois sont généralement livrés sous la forme de particules de plus grande dimension comprise entre 2 cm et 5cm, la plus petite dimension étant inférieure à 1cm, généralement appelées plaquettes forestières, et pouvant contenir jusqu'à 40 % d'eau.

Dans la suite du texte, par simplification, nous caractériserons les particules constituant la charge biomasse par leur plus grande dimension, sachant que les autres dimensions sont inférieures et que la plus petite dimension est inférieure à 1 cm.

La présente invention permet d'optimiser le conditionnement de la matière première ligno cellulosique en vue notamment de son traitement ultérieur dans une unité de gazéification, plus particulièrement une unité de gazéification en lit entraîné qui nécessite une taille de particules en entrée généralement inférieure à 1mm, et préférentiellement inférieure à 0,5mm.

Ce conditionnement comprend généralement une étape de réduction de la teneur en eau (ou séchage) des particules à un niveau inférieur à 10% poids, suivie d'une étape de réduction de taille des particules jusqu'à atteindre la gamme de taille convenant au traitement dans une unité de gazéification en lit entraîné.

Dans l'art antérieur, l'étape de réduction de taille est généralement réalisée dans un broyeur, la dite étape de broyage étant grandement facilitée par l'étape amont de torréfaction dans la mesure où la torréfaction s'accompagne non seulement d'un séchage, mais aussi d'une déstructuration partielle de la matière ligno cellulosique. La torréfaction peut se définir comme une pyrolyse à température modérée et temps de séjour contrôlé. Les conditions opératoires typiques de la torréfaction correspondent à une température comprise entre 230°C et 300°C en l'absence d'air.

La présente invention décrit une unité qui permet de réaliser simultanément et dans la même enceinte l'étape de torréfaction et l'étape de broyage. Il en résulte une synergie entre les conditions opératoires de la torréfaction qui permettent d'optimiser les conditions de fonctionnement du broyeur. De plus, l'unité fonctionnant en lit fluidisé, il est très facile de traiter en mélange avec les particules de biomasse d'autres particules solides telles que du coke de pétrole ou des particules de charbon. Le dispositif selon la présente invention peut en effet traiter en mélange des particules de biomasse et des particules de coke ou de charbon sous la seule condition que ces dernières aient une taille inférieure aux particules de biomasse.

### EXAMEN DE L'ART ANTERIEUR

Il est connu de l'homme du métier de traiter par thermolyse ou par pyrolyse, à des températures comprises entre 200°C et 280°C, et des temps de séjour de l'ordre de quelques minutes, une charge de type biomasse lignocellulosique afin de l'envoyer ensuite dans un procédé en lit fluidisé ou entraîné, et notamment dans une unité de gazéification à lit entraîné. Il est également connu qu'une thermolyse douce, appelée aussi torréfaction, modifie la structure de la biomasse de telle manière que les opérations ultérieures de broyage s'en trouvent facilitées, ainsi que la forme finale des particules solides obtenues qui se rapprochent de particules sphériques. En revanche, pratiquement aucune information n'est fournie sur la technologie utilisée pour réaliser ladite torréfaction.

Le brevet FR 2 678 850 de la demanderesse décrit un four de pyrolyse adapté au traitement des déchets d'ordure ménagère. Ce four de pyrolyse ne fait pas appel à un lit fluidisé.

Le brevet US 4,787,917 décrit un procédé de torréfaction de bois à une température comprise entre 250°C et 280°C de manière à délivrer des bâtonnets de longueur comprise entre 5 et 20 mm. Ce procédé de torréfaction ne fait pas appel à un lit fluidisé.

Le document WO 92/12796 décrit une unité de broyage et de séchage de matériaux tels que des pates, des boues, des gâteaux de filtration, des matériaux fibreux.

Cette unité fonctionne à l'état fluidisé, mais n'enseigne aucune différenciation des vitesses de fluidisation permettant de séparer dans des zone différentes de ladite unités les particules les plus petites et les particules les plus grosses.

De manière générale, nous n'avons pas trouvé dans l'art antérieur de procédé de torréfaction et de broyage opérant en lit fluidisé appliqué à des particules ayant des masses volumiques comprises entre 300 et 800 kg/m³, et des dimensions de l'ordre de quelques centimètres.

### DESCRIPTION SOMMAIRE DES FIGURES

La figure 1 est une vue de côté de l'unité de torréfaction et de broyage en lit fluidisé selon l'invention. La figure 1 représente une unité fonctionnant à pression atmosphérique.
La figure 2 est une vue de dessus de l'unité de torréfaction et de broyage selon l'invention.
La figure 3 est une vue en perspective de l'unité de torréfaction et de broyage selon l'invention.
La figure 4 représente de façon plus détaillée le broyeur avec ses protrusions faisant partie intégrante de l'unité selon l'invention.

### DESCRIPTION SOMMAIRE DE L'INVENTION

La présente invention concerne un procédé de torréfaction et de broyage en lit fluidisé d'une charge contenant essentiellement de la matière lignocellulosique en vue notamment de son traitement ultérieur dans une unité de gazéification. La présente invention définit également une unité permettant de réaliser le dit procédé.

La matière première est constituée de déchets végétaux de type lignocellulosique tels que des copeaux de divers essences de bois. Cette matière première sera supposée disponible à l'état de copeaux de dimension typique comprise entre 2 cm et 5 cm, avec une teneur en eau comprise entre 10 % et 40 % poids.

L'unité selon l'invention permet de réaliser une pyrolyse douce, appelée torréfaction, opérée à une température comprise entre 230°C et 300°C, de préférence comprise entre 250°C et 280°C, en absence d'air, permettant d'arriver à une teneur en eau de la biomasse inférieure à 5 % poids, et préférentiellement comprise entre 2% et 4% poids.

Il permet simultanément de réaliser une réduction de la taille des particules introduites dans l'unité à une taille inférieure à 1 mm, et préférentiellement inférieure à 500 microns.

La taille des particules en sortie de l'unité selon l'invention peut être choisie par l'intermédiaire de la vitesse de fluidisation comme il sera expliqué plus loin.

Lorsqu'il est dit que les particules en sortie de l'unité ont une taille par exemple inférieure à 1mm, cela signifie précisément que 95% en poids d'un échantillon prélevé en sortie de l'unité est constitué de particules ayant une taille inférieure à 1mm.

Le procédé de torréfaction de matière de type biomasse lignocellulosique selon la présente invention suppose que la biomasse soit disponible en copeaux de taille comprise entre 2 cm et 5 cm. Généralement, ces copeaux ont une forme de parallélépipède, et nous caractérisons leur taille par la notion de plus grande dimension.

En cas de besoin, une étape de broyage primaire, appelée aussi déchiquetage, sera nécessaire pour atteindre ladite taille de copeaux, mais elle ne fait pas partie intégrante de la présente invention.

L'unité de torréfaction et de broyage selon l'invention fonctionne à une température comprise entre 200°C et 350°C, préférentiellement entre 250°C et 280°C, avec un temps de séjour pour les plus grosses particules, compris entre 10 et 40 minutes, préférentiellement compris entre 15 et 30 minutes. On entend par " plus grosses particules "dans le contexte de l'invention, des particules de taille supérieure à 2 mm.

L'unité selon l'invention peut fonctionner selon les besoins jusqu'à une pression de 30 bars (1 bar = 10⁵ pascal), ce qui est un avantage, en particulier en cas d'utilisation ultérieure dans une unité de gazéification. En effet la dite unité de gazéification en lit entraîné fonctionne généralement à une pression comprise entre 20 et 40 bars (1 bar = 10⁵ pascal). On peut donc transférer directement les particules de biomasse en sortie de la présente unité, vers une unité de gazéification située,en aval.

L' unité de torréfaction et de broyage en lit fluidisé selon l'invention est constituée d'une enveloppe limitée par deux parois sensiblement verticales (P1), (P2), et présentant au moins une paroi inclinée (P3) définissant en allant de bas en haut, trois zones :
- une zone inférieure (1) munie d' un moyen de fluidisation adapté à la fluidisation de particules de taille comprise entre 2 mm et 5 mm, et équipée d'un broyeur placé au fond de la dite zone,
- une zone intermédiaire (2), munie d'un moyen de fluidisation adapté à la fluidisation de particules de taille comprise entre 1 et 2 mm,
- une zone supérieure (3) munie d'un moyen de fluidisation adapté à la fluidisation des particules de taille inférieure à 1 mm.

La tubulure d'introduction (11) des particules à traiter plonge à l'intérieur de l'unité préférentiellement au niveau de la zone intermédiaire (2), et l'angle (α) de la paroi inclinée (P3) par rapport à la verticale est généralement compris entre 30° et 60°, et préférentiellement compris entre 35° et 45°.

Il n'y a pas de contrainte particulière dans la forme des parois (P1), (P2), mais le plus souvent pour des raisons de simplicité de construction, les parois (P1), (P2) autres que la paroi inclinée, sont de forme plane.

Ainsi, selon une variante préférée, l'unité de torréfaction et de broyage de particules de biomasse en lit fluidisé selon l'invention a la forme générale d'un secteur, l'angle (β) des parois sensiblement verticales (P1) et (P2) délimitant ledit secteur, étant compris entre 30° et 360°, et préférentiellement compris entre 45° et 360°.

Le cas particulier d'un angle de 360° correspond à une unité qui aurait une forme cylindrique et dans ce cas, les parois (P1) et (P2) viennent se confondre. Une telle unité d'angle (β) égal à 360° reste parfaitement dans le cadre de la présente invention.

L'unité de torréfaction et de broyage selon l'invention peut fonctionner à pression atmosphérique ou jusqu'à des niveaux de pression d'environ 50 bars.

Dans le cas d'une unité fonctionnant à pression atmosphérique, la partie supérieure de l'unité peut être constituée d'un simple déversoir (6), le niveau du lit fluidisé (7) dans la partie supérieure s'établissant à naturellement un niveau permettant le déversement continu des particules traitées.

Dans le cas d'une unité fonctionnant à une pression de quelques dizaines de bars, la partie supérieure de l'unité est fermée et présente une tubulure de sortie située dans la partie supérieure de ladite unité.

La configuration de la partie supérieure de l'unité et en particulier de l'organe d'évacuation des particules traitées n'est pas une caractéristique essentielle de l'unité selon la présente invention, et peut avoir toute forme bien connue de l'homme du métier et être éventuellement équipée d'un organe de séparation entre les particules les plus fines et le gaz de fluidisation de manière à réintroduire dans l'unité lesdites particules les plus fines qui seraient éventuellement entraînées au dessus de la zone supérieure de l'unité.

L'unité de torréfaction et de broyage de particules de biomasse selon l'invention fonctionne en lit fluidisé. Les organes de fluidisation de chacune des trois zones constituant l'unité sont calculés de manière à réaliser une perte de charge qui est, selon la pratique courante de l'homme du métier, rapportée au poids du lit de particules à fluidiser dans chacune desdites zones.

Ainsi l'organe de fluidisation (3) de la zone inférieure (1) génère une perte de charge généralement comprise entre 0,2 et 1,5 fois le poids du lit de particules rapporté à la section de la dite zone inférieure (1), et préférentiellement compris entre 0,3 et 1,0 le poids du lit de particules rapporté à la section de la dite zone inférieure.

L'organe de fluidisation (4) de la zone intermédiaire (2) génère une perte de charge généralement comprise entre 0,2 et 1,5 fois le poids du lit de particules rapporté à la section de la dite zone intermédiaire (2), et préférentiellement compris entre 0,3 et 1,0 le poids du lit de particules rapporté à la section de la dite zone intermédiaire.

Et l'organe de fluidisation (5) de la zone supérieure (3) génère une perte de charge généralement comprise entre 0,2 et 1,5 fois le poids du lit de particules rapporté à la section de ladite zone supérieure (3), et préférentiellement compris entre 0,3 et 1,0 le poids du lit de particules rapporté à la section de la dite zone supérieure.

Les organes de fluidisation de chacune des zones (1), (2) et (3) ne sont pas nécessairement identiques.

Le plus souvent, les organes de fluidisation sont constitués de grilles perforées, la dimension et la densité des orifices étant déterminées par la valeur de perte de charge retenue pour chacune des zones.

Néanmoins, l'unité selon la présente invention peut faire appel à d'autres types d'organe de fluidisation que des grilles, et est compatible avec tous les systèmes de fluidisation développés par l'homme du métier.

La détermination des vitesses de fluidisation de chaque zone de l'unité est faite de manière à réaliser la fluidisation des plus grosses particules dans la zone inférieure de l'unité, la fluidisation des particules de taille intermédiaire dans la dite zone intermédiaire, et la fluidisation des particules les plus petites quittant l'unité, dans la dite zone supérieure de l'unité.

Ainsi, la vitesse de fluidisation dans la zone inférieure (1) de ladite unité est généralement comprise entre 1,3 et 2,5 fois la vitesse minimale de fluidisation des particules dont le diamètre est compris entre 1 et 2 mm.

La vitesse de fluidisation dans la zone intermédiaire (2) de ladite unité est généralement comprise entre 1,3 et 2 fois la vitesse minimale de fluidisation des particules dont le diamètre est compris entre 1 et 2 mm.

La vitesse de fluidisation dans la zone supérieure (3) de l'unité est généralement comprise entre 1,3 et 1,5 fois la vitesse minimale de fluidisation des particules dont le diamètre est inférieure à 1 mm.

L'unité de torréfaction et de broyage selon la présente invention permet de réaliser un temps de séjour moyen des particules de biomasse les plus grosses généralement compris entre 10 et 40 minutes, et préférentiellement compris entre 15 et 30 minutes.

De manière générale, la température à l'intérieur de ladite unité est déterminée de manière à atteindre les conditions de la torréfaction, soit une température généralement comprise entre 230 °C et 300°C, et préférentiellement comprise entre 250°C et 280°C.

Selon une caractéristique préférée de l'unité selon l'invention, le broyeur (12) équipant la zone inférieure de l'unité selon l'invention est placé au fond de la dite zone de telle manière que la distance entre les extrémités dudit broyeur et la paroi de la zone inférieure (1) la plus proche soit comprise entre 0,5 et 2 fois le diamètre des plus grosses particules présentes dans l'unité.

Selon une autre caractéristique préférée de l'unité selon l'invention, le broyeur (12) placé dans la zone inférieure de l'unité selon l'invention possède des protrusions contondantes sur le stator (8) et des protrusions contondantes correspondantes sur le rotor (10), de manière que l'entrefer entre ces protrusions soit généralement compris entre 1,0 et 1,5 fois la taille des particules à obtenir en sortie d'unité.

### DESCRIPTION DETAILLEE DE L'INVENTION

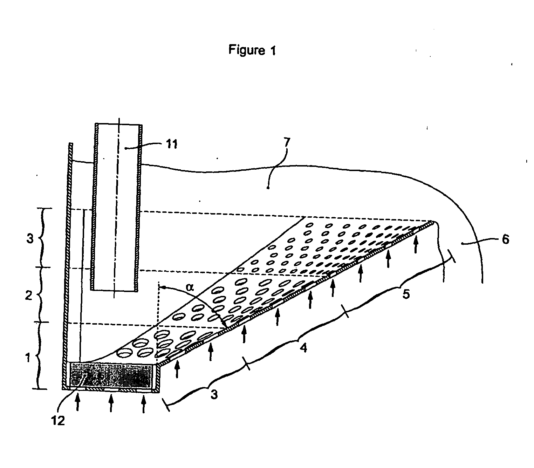

L'unité de torréfaction et de broyage en lit fluidisé, objet de la présente invention est décrite ci dessous au moyen des figures 1, 2 et 3 et 4. Sur chacune de ces figures, les éléments se correspondant sont repérés par le même numéro.

Dans la suite du texte, par simplification, on appelle grosses particules les particules de taille supérieure à 5 mm, particules intermédiaires, les particules de taille comprise entre 2 mm et 5 mm, et on appelle petites particules les particules de taille inférieure à 1mm.

L'unité est conçue de manière à organiser une gradation de la vitesse de fluidisation depuis le bas de l'unité (zone inférieure 1) adapté à la fluidisation des grosses particules, la zone intermédiaire (zone 2) adaptée à la fluidisation des particules intermédiaires, jusqu'au haut de l'unité (zone supérieure 3) adaptée à la fluidisation des petites particules.

Il ne faut pas entendre ces zones comme des compartiments étanches. En vertu du caractère agité de la fluidisation, les particules circulent d'une zone à l'autre, mais on trouve majoritairement dans chaque zone les particules correspondant à la vitesse de fluidisation de ladite zone. On entend par majoritairement un pourcentage de présence des particules dans la zone correspondant à leur vitesse de fluidisation, d'au moins 50%, et préférentiellement d'au moins 70%. La réalisation de cet objectif dépend du choix des vitesses de fluidisation dans chacune des zone.

Les particules de biomasse à traiter sont introduites par le haut de l'unité, généralement par gravite, au moyen d'une conduite notée (11) qui débouche au sein du lit de particules, préférentiellement dans la zone intermédiaire (2).

L'évacuation des particules ayant la taille désirée (inférieure à 1mm) est réalisée dans la partie supérieure de l'unité au moyen d'une conduite (6), ou éventuellement par un simple déversoir. Les particules les plus grosses se situent principalement dans la zone inférieure (1) où elles sont fluidisées par la présence de particules intermédiaires, et permettent de ce fait la mise en fluidisation des particules introduites par la conduite (11).

Les particules introduites dans l'unité ont une plus grande dimension comprise entre 2 cm et 5 cm et ne sont en principe pas fluidisables en tant que telles. Elles sont mises en fluidisation par leur mélange avec les particules fluidisables se trouvant dans la zone intermédiaire (2) et dans la zone inférieure (1). Les particules à traiter mises en fluidisation, rencontrent le broyeur installé dans la zone inférieure (1).

Supposons qu'une particule de 2 cm introduite par la conduite (11) rencontre le broyeur qui la fragmente en un certain nombres de particules plus petites, certaines ayant la taille requise en sortie d'unité, d'autres ayant une taille supérieure à la taille requise. Ces particules n'ayant pas la taille requise, par exemple 5 mm, vont séjourner au voisinage du broyeur à l'état fluidisé, et finiront par être de nouveau broyées, car l'agitation inhérente au milieu fluidisé les amènera statistiquement au contact du broyeur.

Au bout d'un certain nombre de passes dans le broyeur, les particules introduites dans l'unité atteignent la taille requise (inférieure à 1mm, et préférentiellement inférieure à 500 microns), et sont alors entraînées vers la zone supérieure (3) de l'unité où est établie la vitesse de fluidisation qui leur correspond. En effet, au niveau de la zone (1), adaptée à la fluidisation de particules comprise entre 2 et 5 mm, les particules inférieures à 1 mm subissent une vitesse supérieure à leur vitesse de fluidisation propre. Elles sont donc entraînées vers la zone supérieure (3). Les particules de taille supérieure à 5 mm sont ramenées vers le broyeur en vertu de l'existence d'au moins une paroi inclinée. Il a été montré qu'une seule paroi de forme inclinée est suffisante pour favoriser le mouvement descendant des grosses particules.

L'angle (α) de la paroi inclinée est généralement compris entre 30° et 60° par rapport à la verticale, et préférentiellement compris entre 35° et 45°.

Il s'établit donc tout au long de la paroi inclinée (P3) s'étendant de la zone inférieure (1) de l'unité à la zone supérieure (3), un courant descendant des particules les plus grosses, supérieures à 5 mm, qui sont ainsi ramenées vers le broyeur installé dans la zone inférieure (1).

La forme inclinée de la paroi (P3) facilite le mouvement descendant des particules les plus grosses, mais toute forme suivant approximativement une ligne inclinée joignant la zone inférieure (1) et la zone supérieure (3) de l'unité reste bien entendu dans le cadre de l'invention.

En particulier une forme en partie curviligne, ou plus généralement, une forme alternant des portions curvilignes et des portions rectilignes de manière que la ligne joignant le point le plus bas de la zone inférieure au point le plus haut de la zone supérieure de l'unité, présente globalement un angle d'inclinaison (α) compris entre 30° et 60°, reste dans le cadre de la présente invention.

Le gaz de fluidisation peut être tout gaz inerte tel que l'azote ou le CO2, auquel peut s'ajouter éventuellement une partie des gaz issus de la torréfaction après séparation des particules solides.

L'organe de fluidisation par lequel le gaz de fluidisation est introduit le long de la paroi inclinée (P3) peut être constitué d'une simple grille perforée, les orifices ayant un diamètre et une densité calculés de manière à satisfaire la valeur voulue de la perte de charge à la traversée desdits orifices, et à satisfaire les conditions de fluidisation propre à la zone considérée.

Prenons à titre d'exemple la zone intermédiaire (2) qui réalise la fluidisation des particules d'un diamètre compris entre 1 et 2 mm. La vitesse de fluidisation dans cette zone est choisie de manière à être comprise entre 1,3 et 2,0 fois la vitesse minimale de fluidisation des particules "moyennes" de ladite zone, c'est à dire de particules ayant un diamètre typique de 1,5 mm et une masse volumique de 500 kg/m3.

La vitesse de fluidisation est définie comme le rapport du débit de gaz introduit dans la zone considérée sur la section de ladite zone. Le débit de gaz étant fixé par la vitesse de fluidisation à réaliser dans la zone considérée, le diamètre et la densité des orifices résultent du calcul de la perte de charge à la traversée de l'organe de fluidisation.

Le critère généralement admis par l'homme du métier est de réaliser une perte de charge à la traversée de l'organe de fluidisation comprise entre 0,3 et 1,5 fois le poids de la couche fluidisée rapporté à la section de la zone considérée, en fonction de la plus ou moins grande difficulté à fluidiser les particules considérées.

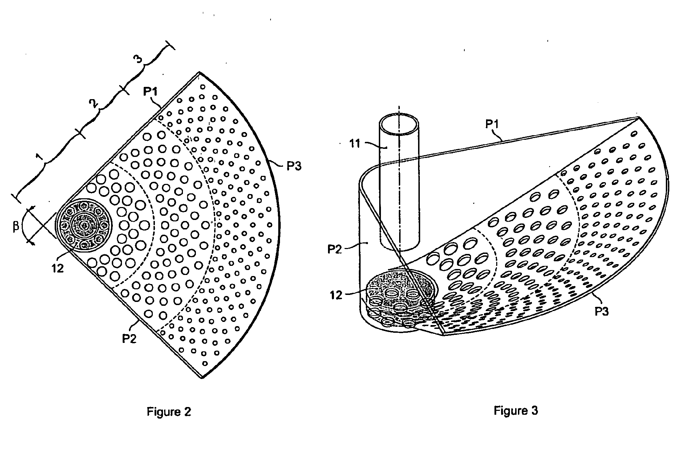

De manière préférée, on conserve le diamètre des orifices constant sur l'ensemble de l'organe de fluidisation, et on fait varier la densité des orifices selon la zone pour atteindre le débit de fluidisation voulue dans chaque zone. Néanmoins, on peut également faire varier le diamètre des orifices selon chacune des zones, comme cela est montré à titre d'illustration sur les figures 1 et 2, pour mieux faire ressortir la différenciation des zones inférieure, intermédiaire et supérieure.

La méthode de dimensionnement de l'organe de fluidisation sera illustrée dans les exemples qui suivent la présente description.

Le broyeur (12) situé dans la zone inférieure de l'unité selon l'invention présente un stator équipé de protrusions contondantes (8) et un rotor équipé de protrusions (10) correspondantes aux protrusions (8). On entend par protusions correspondantes (8) et (10) des protrusions dont les formes se correspondent de manière à ce que les particules de taille inférieure à 1,5 mm passeront entre elles. Cette condition s'obtient par un réglage de l'entrefer séparant deux protrusions correspondantes.

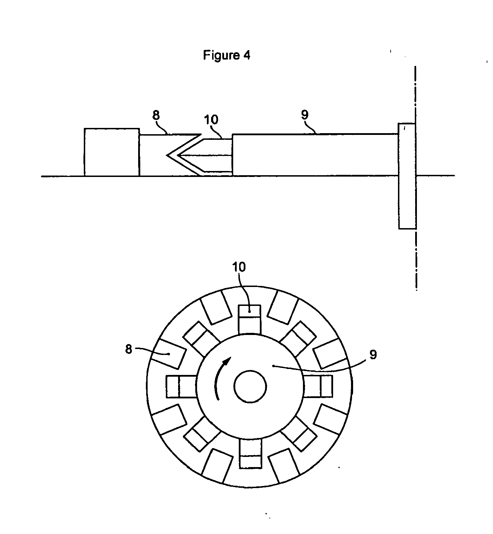

Les formes des protrusions (8) et (10) peuvent être très diverses. Sur la figure 4, on a représenté à titre d'exemple les protrusions (10) en forme de flèche, et les protrusions correspondantes (8) en forme d'encoche recevant la pointe de la flèche.

L'entraînement du broyeur est généralement réalisé au moyen d'un moteur électrique situé à l'extérieur du présente réacteur.

La zone inférieure (1) dans laquelle est situé le broyeur est fluidisée à une vitesse qui correspond à la fluidisation des particules de taille comprise entre 2 et 5 mm. La fluidisation des particules de taille comprises entre 2 mm et 5 mm induit la fluidisation des particules de taille plus grande, par exemple de taille de 1 cm à 5 cm introduites dans l'unité.

Il s'agit ici d'une propriété des lits fluidisés de communiquer l'état fluidisé à des particules qui ne seraient pas fluidisables seules, mais le deviennent en mélange avec des particules fluidisables.

La fluidisation est réalisée au moyen d'une grille qui répond aux mêmes critères de perte de charge que les autres organes de fluidisation. La fluidisation permet également d'éviter l'accumulation de particules au voisinage du broyeur et facilite le passage répété des particules à l'intérieur dudit broyeur.

Des que les particules ont atteint une taille inférieure à 1 mm, elles sont entraînées vers la zone supérieure de l'unité (3) d'où elles sont évacuées par la tubulure d'évacuation (6).

Le temps de séjour moyen d'une particule depuis son introduction dans l'unité par la conduite d'amenée (11) jusqu'à sa sortie par la tubulure d'évacuation (6) est généralement inférieur à 30 minutes, et préférentiellement inférieur à 20 minutes.

La température de l'unité en tout point est généralement comprise entre 230°.C et 300°C, et préférentiellement comprise entre 250°C et 280°C.

La pression de l'unité est généralement comprise entre la pression atmosphérique et 30 bars ( 1 bar =10⁵ Pascal).

Le choix de la pression dépend de la pression opératoire de l'unité de gazéification placée en aval.

La présente unité permet de réaliser un couplage étroit et une véritable synergie entre le processus de torréfaction et le broyage. Il est en effet connu de l'homme du métier que la torréfaction s'accompagne d'une fragilisation de la structure lignocellulosique et facilite le broyage ultérieur.

L'implantation dans l'unité d'un broyeur fonctionnant au sein d'un lit fluidisé opéré aux conditions opératoires de la torréfaction permet d'optimiser le fonctionnement dudit broyeur qui reçoit une majorité de particules torréfiées, c'est à dire plus précisément, une majorité de particules ayant séjourné aux conditions de la torréfaction.

De plus, la différenciation des vitesses de fluidisation entre la zone inférieure (1) et la zone supérieure de l'unité (3) permet de libérer la zone inférieure des particules fines, c'est à dire celles qui ont atteint une taille inférieure à 1mm, ce qui ne serait pas le cas en l'absence d'une fluidisation différenciée qui pourrait laisser séjourner les particules fines formées au voisinage du broyeur.

### EXEMPLES

Le premier exemple concerne une unité selon l'invention travaillant à pression atmosphérique et traitant des particules de biomasse sous la forme de plaquettes forestières de dimension 2cm*3cm*5cm avec une teneur en eau de 35 % poids en vue d'obtenir des particules de taille inférieure à 500 microns et de teneur en eau inférieure à 5% poids.

Le débit de charge biomasse à traiter est de: 20 000 tonnes/an soit 2,31 tonnes/heure.

L'unité de torréfaction et de broyage selon l'invention correspond à un secteur conique d'angle au sommet (β) de 90° et a les dimensions suivantes:

| | |
|---|---|
| Hauteur totale: | 2,5 m |
| Diamètre maximal (en zone supérieure): | 4,6 m |
| Diamètre du broyeur:(zone inférieure): | 0,5 m |
| Diamètre zone intermédiaire: | de 0,5 et 3,6 m |
| Diamètre zone supérieure: | de 3,6 à 4,6 m |
| Angle (α) de la paroi inclinée/ verticale: | 43° |
| Vitesse de fluidisation en zone 1 et 2: | 27,3 cm/s |
| Vitesse de fluidisation en zone 3: | 6,3 cm/s |
| Fraction vide moyenne du lit fluidisé: | 0,47 |
| Temps de séjour moyen des particules: | 20 minutes |
| Débit de gaz en zone 1 et 2: | 1305 Nm3/heure |
| Débit de gaz extrait en zone 3: | 190 Nm3/heure |

Le dimensionnement des organes de fluidisation pour les zones inférieure, intermédiaire et supérieure est effectué à partir du critère de perte de charge à la traversée dudit organe choisi égal à 0,5 fois le poids du lit ramené à la section de la zone considérée, et en recherchant des vitesse de gaz en sortie de chaque orifice comprises entre 40 m/s et 70 m/s. On choisit une simple grille perforée d'orifices.

Ce qui donne pour les zones inférieure et intermédiaire:
- diamètre d'orifice: 5,6 mm et 590 orifices par m² de section de grille et pour la zone supérieure:
- diamètre d'orifice 4,0 mm et 410 orifices par m² de section de grille

Le second exemple concerne une unité selon l'invention travaillant sous une pression de 30 bars et traitant des particules de biomasse sous la forme de plaquettes forestières de dimension 2cm*3cm*5cm, ayant une teneur en eau de 40% poids en vue d'obtenir des particules de taille inférieure à 500 microns et de teneur en eau inférieure à 5% poids.

Le débit de charge biomasse à traiter est de 40 000 tonnes/ an soit 4,62 tonnes/heure.

L'unité de torréfaction et de broyage selon l'invention correspond à un secteur conique d'angle au sommet (β) de 90° et a les dimensions suivantes:

| | |
|---|---|
| Hauteur totale: | 3,4 m |
| Diamètre maximal (en zone supérieure): | 5,0 m |
| Diamètre du broyeur:(zone inférieure): | 0,6 m |
| Diamètre zone intermédiaire: | de 0,5 et 4,2 m |
| Diamètre zone supérieure: | de 4,2 à 5,0 m |
| Angle (α) de la paroi inclinée/ verticale: | 36° |
| Vitesse de fluidisation en zone 1 et 2: | 12,0 cm/s |
| Vitesse de fluidisation en zone 3: | 4,3 cm/s |
| Fraction vide moyenne du lit fluidisé | 0,47 |
| temps de séjour moyen des particules: | 15 minutes |
| Débit de gaz en zone 1 et 2 | 24430 Nm3/heure |
| Débit de gaz extrait en zone 3 | 3500 Nm3/heure |

Le dimensionnement des organes de fluidisation pour les zones inférieure intermédiaire et supérieure est effectué à partir du critère de perte de charge à la traversée dudit organe égal à 0,5 fois le poids du lit ramené à la section de la zone considérée, et en recherchant des vitesse de gaz en sortie de chaque orifice comprises entre 40 m/s et 70 m/s.

On choisit une simple grille perforée d'orifices.

Ce qui donne pour les zones inférieure et intermédiaire:
- diamètre d'orifice: 6,0 mm et 695 orifices par m² de section de grille et pour la zone supérieure:
- diamètre d'orifice 3,0 mm et 215 orifices par m² de section de grille.

## Revendications

1. Unité de torréfaction et de broyage en lit fluidisé de particules de biomasse de plus grande dimension comprise entre 2 cm et 5 cm, constituée d'une enveloppe ayant la forme générale d'un secteur présentant a) deux parois sensiblement verticales (P1), (P2), l'angle (β) des parois (P1) et (P2) délimitant ledit secteur étant compris entre 30° et 360°, et préférentiellement compris entre 45° et 360°, et b) au moins une paroi inclinée (P3), définissant en allant de bas en haut trois zones :
- une zone inférieure (1) munie d'un moyen de fluidisation adapté à la fluidisation de particules de taille comprises entre 2 mm et 5 mm, et équipée d'un broyeur placé au fond de la dite zone,
- une zone intermédiaire (2), munie d'un moyen de fluidisation adapté à la fluidisation de particules de taille comprise entre 1 et 2 mm,
- une zone supérieure (3) munie d'un moyen de fluidisation adapté à la fluidisation des particules de taille inférieure à 1 mm,
la tubulure d'introduction (11) des particules à traiter plongeant à l'intérieur de l'unité au niveau de la zone intermédiaire (2), et l'angle (α) de la paroi inclinée (P3) par rapport à la verticale étant compris entre 30° et 60°.

2. Unité de torréfaction et de broyage de particules de biomasse en lit fluidisé selon la revendications 1, dans laquelle l'angle (α) de la paroi inclinée par rapport à la verticale est compris entre 35° et 45°.

3. Unité de torréfaction et de broyage de particules de biomasse en lit fluidisé selon l'une quelconque des revendications 1 à 3, dans laquelle le diamètre du broyeur est tel que la distance entre les extrémités dudit broyeur et la paroi de la zone inférieure (1) la plus proche est compris entre 0,5 et 2 fois le diamètre des plus grosses particules présentes dans la zone inférieure (1) de l'unité.

4. Unité de torréfaction et de broyage de particules de biomasse en lit fluidisé selon l'une quelconque des revendications 1 à 4, dans laquelle l'organe de fluidisation (3) de la zone inférieure (1), l'organe de fluidisation (4) de la zone intermédiaire (2), et l'organe de fluidisation (5) de la zone supérieure (3) génèrent une perte de charge comprise entre 0,2 et 1,5 fois le poids du lit de particules rapporté à la section de la zone considérée, et préférentiellement comprise entre 0,3 et 1,0 fois le poids du lit de particules rapporté à la section de la zone considérée.

5. Unité de torréfaction et de broyage de particules de biomasse en lit fluidisé selon l'une quelconque des revendications 1 à 5, dans laquelle le broyeur possède des protrusions contondantes sur le stator (8) et des protrusions contondantes correspondantes sur le rotor (10), de manière que l'entrefer entre ces protrusions soit compris entre 1,0 et 1,5 fois la taille des particules à obtenir en sortie d'unité.

6. Procédé de torréfaction et de broyage de particules de biomasse en lit fluidisé utilisant l'unité selon l'une quelconque des revendications 1 à 5, dans lequel la température à l'intérieur de ladite unité est comprise entre 230 °C et 300°C, et préférentiellement comprise entre 250°C et 280°C et,
- la vitesse de fluidisation dans la zone inférieure (1) de ladite unité est comprise entre 1,3 et 2,5 fois la vitesse minimale de fluidisation des particules dont le diamètre est compris entre 1 et 2 mm et,
- la vitesse de fluidisation dans la zone intermédiaire (2) de ladite unité est comprise entre 1,3 et 2,0 fois la vitesse minimale de fluidisation des particules dont le diamètre est compris entre 1 et 2 mm et,
- la vitesse de fluidisation dans la zone supérieure (3) de ladite unité est comprise entre 1,3 et 1,5 fois la vitesse minimale de fluidisation des particules dont le diamètre est inférieure à 1 mm.

7. Procédé de torréfaction et de broyage de particules de biomasse en lit fluidisé utilisant l'unité selon l'une quelconque des revendications 1 à 5, dans lequel le temps de séjour moyen des particules de biomasse les plus grosses présentes dans ladite unité est compris entre 10 et 40 minutes, et préférentiellement compris entre 15 et 30 minutes.

## Claims

1. A unit for fluidized bed torrefaction and grinding of particles of biomass with a largest dimension in the range 2 cm to 5 cm, constituted by an envelope having the general shape of a sector having a) two substantially vertical walls (P1), (P2), the angle (β) of the walls (P1) and (P2) delimiting said sector being in the range 30° to 360°, preferably in the range 45° to 360°; and b) at least one inclined wall (P3) defining three zones, from bottom to top:
• a lower zone (1) provided with a fluidization means adapted to fluidization of particles in the range 2 mm to 5 mm in size, and provided with a grinder placed at the bottom of said zone;
• an intermediate zone (2) provided with a fluidization means adapted to fluidization of particles in the range 1 to 2 mm in size;
• an upper zone (3) provided with a fluidization means adapted to fluidization of particles less than 1 mm in size;
the pipe (11) for introducing the particles to be treated reaching into the unit to the level of the intermediate zone (2), and the angle (α) of the wall (P3) inclined with respect to the vertical being in the range 30° to 60°.

2. A unit for fluidized bed torrefaction and grinding of particles of biomass according to claim 1, in which the angle (α) of the wall (P3) inclined with respect to the vertical is in the range 35° to 45°.

3. A unit for fluidized bed torrefaction and grinding of particles of biomass according to any one of claims 1 to 3, in which the diameter of the grinder is such that the distance between the ends of said grinder and the wall of the lower zone (1) which is closest is in the range 0.5 to 2 times the diameter of the coarsest particles present in the lower zone (1) of the unit.

4. A unit for fluidized bed torrefaction and grinding of particles of biomass according to any one of claims 1 to 4, in which the fluidization means (3) of the lower zone (1), the fluidized means (4) of the intermediate zone (2), and the fluidization means (5) of the upper zone (3) create a pressure drop in the range 0.2 to 1.5 times the weight of the bed of particles with respect to the cross section of the zone under consideration, and preferably in the range 0.3 to 1.0 times the weight of the bed of particles with respect to the cross section of the zone under consideration.

5. A unit for fluidized bed torrefaction and grinding of particles of biomass according to any one of claims 1 to 5, in which the grinder has contusive protrusions on the stator (8) and corresponding contusive protrusions on the rotor (10) such that the gap between said protrusions is in the range 1.0 to 1.5 times the size of the particles to be obtained at the unit outlet.

6. A process for the fluidized bed torrefaction and grinding of particles of biomass using the unit according to any one of claims 1 to 5, in which the temperature inside said unit is in the range 230°C to 300°C, preferably in the range 250°C to 280°C; and:
• the velocity of fluidization in the lower zone (1) of said unit is in the range 1.3 to 2.5 times the minimum fluidization velocity for particles with a diameter in the range 1 to 2 mm; and
• the velocity of fluidization in the intermediate zone (2) of said unit is in the range 1.3 to 2.0 times the minimum fluidization velocity for particles with a diameter in the range 1 to 2 mm; and
• the velocity of fluidization in the upper zone (3) of said unit is in the range 1.3 to 1.5 times the minimum fluidization velocity for particles with a diameter of less than 1 mm.

7. A process for the fluidized bed torrefaction and grinding of particles of biomass using the unit according to any one of claims 1 to 5, in which the mean residence time for the coarsest biomass particles present in said unit is in the range 10 to 40 minutes, preferably in the range 15 to 30 minutes.

## Patentansprüche

1. Einheit zum Rösten und Zerkleinern von Biomassepartikeln größerer Abmessung zwischen 2 cm und 5 cm im Fließbett, bestehend aus einer Hülle mit der allgemeinen Form eines Sektors, umfassend a) zwei im Wesentlichen vertikale Wände (P1), (P2), wobei der Winkel (β) der Wände (P1) und (P2), der den Sektor begrenzt, zwischen 30° und 360° und vorzugsweise zwischen 45° und 360° beträgt, und b) mindestens eine geneigte Wand (P3), die von unten nach oben drei Zonen definiert:
- eine untere Zone (1), die mit einem Fließmittel versehen ist, das zur Fluidisierung von Partikeln mit einer Größe zwischen 2 mm und 5 mm geeignet ist, und die einen Zerkleinerer umfasst, der am Boden der Zone angeordnet ist,
- eine Zwischenzone (2), die mit einem Fließmittel versehen ist, das zur Fluidisierung von Partikeln mit einer Größe zwischen 1 und 2 mm geeignet ist,
- eine obere Zone (3), die mit einem Fließmittel versehen ist, das zur Fluidisierung von Partikeln mit einer Größe unter 1 mm geeignet ist,
wobei das Rohr (11) zur Einführung der zu behandelnden Partikel in das Innere der Einheit im Bereich der Zwischenzone (2) eintaucht und der Winkel (α) der geneigten Wand (P3) zur Vertikalen zwischen 30° und 60° beträgt.

2. Einheit zum Rösten und Zerkleinern von Biomassepartikeln im Fließbett nach Anspruch 1, bei der der Winkel (α) der geneigten Wand zur Vertikalen zwischen 35° und 45° beträgt.

3. Einheit zum Rösten und Zerkleinern von Biomassepartikeln im Fließbett nach einem der Ansprüche 1 bis 2, bei der der Durchmesser des Zerkleinerers derart ist, dass der Abstand zwischen den Enden des Zerkleinerers und der Wand der nächsten unteren Zone (1) zwischen 0,5 und 2 mal der Durchmesser der größten in der unteren Zone (1) der Einheit vorhandenen Partikel ist.

4. Einheit zum Rösten und Zerkleinern von Biomassepartikeln im Fließbett nach einem der Ansprüche 1 bis 3, bei der das Fließelement (3) der unteren Zone (1), das Fließelement (4) der Zwischenzone (2) und das Fließelement (5) der oberen Zone (3) einen Lastverlust zwischen 0,2 und 1,5 mal das Gewicht des Partikelbetts, bezogen auf den Querschnitt der betreffenden Zone, erzeugen, und vorzugsweise zwischen 0,3 und 1,0 mal das Gewicht des Partikelbetts, bezogen auf den Querschnitt der betreffenden Zone.

5. Einheit zum Rösten und Zerkleinern von Biomassepartikeln nach einem der Ansprüche 1 bis 4, bei der der Zerkleinerer stumpfe Vorwölbungen auf dem Stator (8) und entsprechende stumpfe Vorwölbungen auf dem Rotor (10) umfasst, so dass der Spalt zwischen diesen Vorwölbungen zwischen 1,0 und 1,5 mal die Größe der Partikel, die am Ausgang der Einheit erzielt werden soll, ausmacht.

6. Verfahren zum Rösten und Zerkleinern von Biomassepartikeln im Fließbett, das die Einheit nach einem der Ansprüche 1 bis 5, verwendet, bei dem die Temperatur im Inneren der Einheit zwischen 230 °C und 300 °C und vorzugsweise zwischen 250 °C und 280 °C beträgt, und
- die Fließgeschwindigkeit in der unteren Zone (1) der Einheit zwischen 1,3 und 2,5-mal die Mindestfließgeschwindigkeit der Partikel mit einem Durchmesser zwischen 1 und 2 mm beträgt, und
- die Fließgeschwindigkeit in der Zwischenzone (2) der Einheit zwischen 1,3 und 2,0-mal die Mindestfließgeschwindigkeit der Partikel mit einem Durchmesser zwischen 1 und 2 mm beträgt, und
- die Fließgeschwindigkeit in der oberen Zone (3) der Einheit zwischen 1,3 und 1,5-mal die Mindestfließgeschwindigkeit der Partikel mit einem Durchmesser unter 1 mm beträgt.

7. Verfahren zum Rösten und Zerkleinern von Biomassepartikeln im Fließbett, das die Einheit nach einem der Ansprüche 1 bis 5 verwendet, bei dem die durchschnittliche Aufenthaltszeit der größten Biomassepartikel, die in der Einheit vorhanden sind, zwischen 10 und 40 Minuten und vorzugsweise zwischen 15 und 30 Minuten beträgt.
